# EUROPÄISCHE PATENTSCHRIFT

(11) **EP 2 100 856 B1**
(45) Veröffentlichungstag und Bekanntmachung des Hinweises auf die Patenterteilung: **27.02.2013**
(21) Anmeldenummer: 09003000.8
(22) Anmeldetag: 03.03.2009
(51) Int. Cl.: C02F 3/04

(54) **Verfahren zur mikrobiologischen Behandlung von Wasser aus Gewässern**
Method for microbiological treatment of water
Procédé de traitement biologique de l'eau

(30) Priorität: 11.03.2008 DE 102008013639
(43) Veröffentlichungstag der Anmeldung: 16.09.2009
(73) Patentinhaber: biowaba GmbH, 08427 Fraunreuth (DE)
(72) Erfinder:
(74) Vertreter: Auerbach, Bettina

(56) Entgegenhaltungen:
- DE-A1- 2 638 514
- GB-A- 2 057 416
- GB-A- 2 139 290
- JP-A- 2002 239 574
- JP-A- 2003 010 872

## Beschreibung

Die Erfindung betrifft ein Verfahren zur mikrobiologischen Behandlung von Wasser aus Gewässern unter konstanter Zuführung von Luftsauerstoff. Gewässer in diesem Sinne sind:
- fließende und stehende natürliche und künstliche Gewässer in Form von Landschafts- und Waldseen,
- Talsperren, Natur- u. Freibäder, Schwimmbädern, Pools,
- Schwimmteiche,
- Brauchwassersammelbecken,
und sanierungsbedürftige Gewässer aus den vorgenannten Typen sowie Wasservorlagen an Maschinen und Apparaten. Weitere Einsatzfälle sind dann gegeben, wenn Wasser über einen längeren Zeitraum gespeichert und danach wiederverwendet werden soll. Auch hier findet das erfindungsgemäß vorgeschlagene Verfahren seine Anwendung.

Wasser in natürlichen und künstlich angelegten Gewässern, wie Regenwassersammler, Badeteiche, Poolanlagen, Zooteiche und Ähnlichem hat auf Grund der in jedem Wasser enthaltenen organischen Substanzen, der Einflüsse von Eintragssubstanzen aus der Umwelt, der Umgebungstemperatur und der Nutzungsart eine eigene organische Last und eine nur sehr geringe organische Fracht. Dies wirkt sich wiederum durch verschiedenste Bedingungen zum Vorteil eines Gewässers oder auch im ungünstigen Fall zum Nachteil der Wasserqualität aus.
So ist zum Beispiel bei allen im Freien befindlichen Gewässern in den Wintermonaten, in denen die organischen Aktivitäten sehr gering sind automatisch eine Beruhigung der Auswirkungen von organischen Belastungen zu verzeichnen. Steigt der Sauerstoffgehalt wieder, tritt ein Aufklaren des Wassers ein.
Wird mit zunehmender Wärme im Frühjahr bis hin zur Hochbelastung in den Sommermonaten durch den steigenden Sauerstoffverbrauch der organischen Substanzen im Wasser der Sauerstoffvorrat sehr weit abgesenkt, wirkt sich dies nicht nur auf die organischen Substanzen, sondern natürlich auch auf die Wasserqualität (Ph-Wert, Wasserhärte, Nährstoffgehalt, Schadstoffgehalt aus. Folgen sind immer trübes Wasser, Algenbildung und im Extremfall das so genannte Kippen des Wassers, in dessen Folge ein Gebrauch für Lebewesen als auch sonstiger Gebrauch fast unmöglich wird, oder nur mit Einschränkungen möglich ist.
Ein ähnlicher Effekt tritt ein, wenn Wasser längere Zeit ohne Zufuhr von Sauerstoff und Frischwasser sowie unbehandelt steht, wie es zum Beispiel in Regenwasserspeichem der Fall ist. Durch den Abtrag biologischer Fracht von Dächern, welche lange nicht beregnet wurden, werden eine Vielzahl organischer Substanzen in den Wasserspeicher eingebracht, die dort keinen Sauerstoff mehr zugeführt bekommen. Sie setzen sich am Boden des Speichers als Schwebstoffe ab und beginnen regelrecht zu faulen.
Wird nichts oder nur ungenügendes gegen eine solche Entwicklung in einem Gewässer unternommen, kann dies bis zur Unbrauchbarkeit des Wassers auf Dauer führen. Diese Gewässer sind, wenn überhaupt nur noch mit aufwändigen Sanierungsmaßnahmen wieder in einen nutzbaren Zustand versetzbar, wobei selbst die Sanierung sehr kostenintensiv ist, da zum größten Teil Maßnahmen zum Schlammabtrag notwendig werden. Alle Maßnahmen einer Gewässersanierung sind wiederum nur mit kurzem Effekt, wenn anschließend keine Maßnahmen einer kontinuierlichen Wasserbehandlung folgen. Auch hierfür soll eine Lösung gefunden werden, die mit minimalem Aufwand an Kosten und Technik eine Sanierung von Gewässern ohne direkten Eingriff in die Hülle des Gewässers ermöglicht und ohne Zusatz von chemischen Stoffen funktioniert.
Auf dem Markt werden zur Erreichung von klarem, keimfreien und reinem Wasser hauptsächlich folgende Verfahren angeboten:
- Poolanlagen :
   - Chlordosierung + Sandfilteranlagen
- Gartenteiche, Naturteiche, Schwimmteiche :
   - Schlammsammelfilter + Sandfilter
      + pflanzliche und biologische Klärsysteme
      + UV- Filtersysteme + Algenmittel
- Fischteiche und Fischzuchtanlagen :
   - Schlammsammelfilter + UV-Filtersysteme
   - teilbiologische Durchlauffilter
- Regenwassersammelanlagen, Löschwasserteiche:
   - beide kaum beachtet, zum größten Teil unbehandelte Gewässer
- Aquarien
   - UV-Filter +Aktivkohlefilter
   + Schaumstoff Filter

Grundsätzlich sind die o.g. Verfahren alle ähnlich aufgebaut. Jedoch beinhalten alle diese Verfahren entweder Filtereinrichtungen, in denen Feststoffe aus dem Wasser abgehalten und gesammelt werden, oder biologische und pflanzenbiologische Gewässerbereiche in denen die so genannte biologische Filtereinheiten mit Wasser angestaut sind und der Sauerstoff im Wasser mit unterschiedlichen Methoden verteilt wird. Entscheidend bei der Beurteilung dieser Verfahren ist immer ein sehr hoher baulicher Aufwand, der meistens auch nur bei der Neuanlegung einer Gewässeranlage zum Tragen kommt, zudem sind diese Anlagen oft sehr teuer und bieten zum Nutzeffekt kein gutes Verhältnis. Sie sind sehr anfällig gegen zu hohe Temperaturen, Eintragungen von Fremdstoffen und weiteren Einflüssen aus der Umwelt sowie durch die jeweilige Benutzung des Gewässers. Oft sind die Systeme instabil, träge in ihrer Reaktionszeit und haben meist einen sehr hohen Wartungs,- bzw. Regenerierungsaufwand nach längerem Gebrauch zur Folge, bzw. sind nicht regenerierbar, oder nicht zu Reinigen und nur schwer sanierbar.

Die erforderliche Sauerstoffzufuhr in das Wasser oder den biologischen Teil von Behandlungsanlagen wird durch Zuströmen, Verteilen oder Umwälzen innerhalb oder oberhalb des Wassers zu erzielen versucht.

In anderen Verfahren, wie Tropfkörperanlagen, Bioreaktoren und Rieselstrombioreaktoren werden dagegen gute Ergebnisse bei der Behandlung von industriellen, -kommunalen, landwirtschaftlichen und tierischen Abwässern, aber mit sehr großem technischen Aufwand erzielt. Da der Sauerstoffbedarf wegen der hohen organischen Last und dem damit verbundenen hohen Bedarf an Abbauleistung während der Behandlung von Abwässern sehr hoch ist, wird dort zum Teil mit dem zusätzlichen Einblasen von Luft im Gegenstromverfahren gearbeitet, was zu einem gute Ergebnis führt. Der Kosten-Nutzen-Effekt ist jedoch nicht immer vertretbar.

Die Anforderungen beim Behandeln von Abwässern mit sehr hoher organischer Fracht erfordert auch eine sehr technisch ausgereifte komplizierte und teure Anlagenkonfiguration. Die Anforderungen an die biologische Ausgewogenheit des Verfahrens sind sehr hoch und sehr empfmdlich. Entsprechend soll nun bei der Findung eines geeigneten Verfahrens zur Behandlung von normal belastetem Wasser eine einfach zu handhabende technische Lösung herbeigeführt werden.

Die GB 2 057 416 A offenbart sowohl ein Verfahren als auch eine Vorrichtung zur Wasserbehandlung, wobei eine mit Öffnungen versehene Teilvorrichtung (Trennvorrichtung) die Kammer in einen oberen Bereich für den Wasser Einlass und den Wasserauslass und in einen unteren Bereich für die Aufnahme eines Filtermediums trennt. Bei dem Filtermedium handelt es sich um ein poröses Filtermedium, wie Blähton, Eisenstein oder Schlacke. Demzufolge handelt es sich um ein mechanisches Filtermedium. Deshalb reicht es auch aus, dass bei dieser Lösung dem zu behandelnden Wasser vor der Zuleitung zum Behandlungssystem lediglich grobe Feststoffe über 5mm Querschnitt entzogen werden. Die restlichen groben Feststoffe werden von dem mechanischen Filtermedium aufgenommen. Zur notwendigen Unterstützung dieses Vorgangs erfolgt eine Kammerbildung zur räumlichen Trennung des Filtermediums vom Wasserzu- und Wasserablauf. Zur Ableitung des behandelten Wassers ist eine horizontal verlaufende Leitung im unteren Bereich der Vorrichtung angeordnet und mit mehreren Löchern versehen, durch welche das behandelte Wasser in das Rohr eindringt, wobei dieses horizontale Rohr mit mehreren vertikalen Rückführrohren verbunden ist, welche das behandelte Wasser bis zur Wasserauslassleitung nach Oben drückt und von dort aus dem System abgeführt wird.

JP 2002 239 574 und DE 2638514 offenbaren auch Verfahren zur Wasserbehandlung.

Der Erfindung liegt deshalb die Aufgabe zugrunde, ein Verfahren zu entwickeln mit dessen Hilfe im Durchlaufprinzip organische Bestandteile von Wasser mit möglichst geringem technischem Aufwand, platzsparend und mit niedrigen Betriebskosten dem Wasser entzogen werden können, ohne dabei chemische Mittel einzusetzen.
Das Verfahren soll sich durch eine einfache Handhabung ohne großen Wartungsaufwand auszeichnen

Erfindungsgemäß wird die Aufgabe durch die Merkmale des Anspruchs 1 gelöst. Die vorteilhaften Ausgestaltungen sind in den Unteransprüchen beschrieben.
Danach wird das zu behandelnde Wasser, welchem zwischen der Entnahme aus dem Gewässer und der Zufuhrung zum Behandlungssystem Feststoffe größer als 2 mm Querschnitt entzogen wurden, über eine in einem Behälter gelagerte Schüttung aus locker liegendem Trägermaterial mit sehr großer Teilchenoberfläche geleitet und durchfließt diese von oben nach unten in freiem Durchlauf. Das Trägermaterial dient dem Anwachsen eines mikroorganischen Belages, der sich im Laufe der Zeit allein aus dem überströmenden Wasser an den locker liegenden Trägermaterialteilchen bildet. Bei erster Inbetriebnahme kann zur schnelleren Bildung der Mikroorganismen konzentriertes organisches Material aus dem Gewässer entnommen und über die Trägennaterialschüttung verteilt werden.
Das Behandlungssystem, in dem sich das Trägermaterial mit dem überströmenden zu behandelnden Wasser und dem eingetragenen organischen Material aus dem zu behandelnden Gewässer befindet, wird dann einige Stunden bis Tage mit im Umlauf gefahrenem Gemisch aus zu behandelndem Wasser, Luftsauerstoff und organischem Material in freiem Durchlauf ohne Druckbeauflagung durchspült, bis sich ein gleichmäßiger mikroorganischer Grundbelag auf dem Trägermaterial selbstständig gebildet hat. Dabei wird dem Behandlungssystem nur soviel Wasser zugegeben, dass sich nur ein freier Durchlauf und kein wesentlicher Wasserstau im Behandlungssystem einstellt; Der dem Behandlungssystem über Öffnungen frei zugängliche Sauerstoff aus der Umgebungsluft wird beim Überströmen des Wassers über das Trägermaterial mitgerissen und so während des Durchströmens maximal dem Wasser und den Mikroorganismen zur Verfügung gestellt, ohne dass zusätzlicher Druck zur Luftverteilung eingesetzt wird.

Im Dauerbetrieb der Anlage wird das Wasser des zu behandelnden Gewässers aus dem Gewässer abgezogen und einer vorheriger Abscheidung von Feststoffen größer 2 mm Querschnitt unterzogen. Anschließend überströmt das vorgereinigte und mit Restfeststoffen kleiner 2 mm belastete Wasser das locker liegende Trägermaterial mit dem angewachsenen mikroorganischen Belag, der die organischen Bestandteile des Wassers als Nahrungsgrundlage zur Verfügung gestellt bekommt.
Während des Überströmens des zu behandelnden Wassers über die sehr große Oberfläche des mit Mikroorganismen belegten locker liegenden Trägermaterials im Behandlungssystem wird dem Wasser auf seinem Weg von der Aufgabe auf das Trägermaterial bis zum Ableiten aus dem Behandlungssystem in das Gewässer so viel organische Last entnommen, sowie ausreichend Sauerstoff zugeführt, dass sich im Gewässer ein auf ein natürliches Minimum beschränktes und im Gleichgewicht seiner organischen Bestandteile befindliches klares reines Wasser bildet. Die Schwebstoffe sind minimiert und somit wird die Schlammbildung verhindert und bereits vorhandener Schlamm wird nach und nach aufgelöst.
Die vorteilhafte Ausbildung von transparenten Bereichen des Behandlungssystems, zum Beispiel in Form eines transparenten Behälters zur Aufnahme des Trägermaterials, dienen dem zusätzlichen Lichteintrag an den Randzonen der Trägermaterialschüttung. Hierdurch steht neben den im Behandlungssystem vorhandenen organischen Bestandteilen, Nährstoffen und Sauerstoff zusätzlich auch Licht in den Randzonen zur Verfügung, wodurch sich zusätzlich vorteilhafte Algen bilden können, die im Gewässer nicht gewünscht sind. Somit wird durch das Behandlungssystem nicht nur die organische Last des zu behandelnden Wassers vermindert sondern gleichzeitig der mögliche Wuchs von Algen vom Gewässer in das Behandlungssystem verschoben, welches hierdurch zusätzlich den Phosphatgehalt des zu behandelnden Wassers reguliert.

Die Größe der Behandlungsanlage ist abhängig von der organischen Last des Gewässers sowie von dessen Gesamtvolumen. Ihr Maximum beträgt 5% des Gewässervolumens des zu behandelnden Gewässers. Das Behandlungssystem funktioniert in einem Volumenbereich von 0,3 % bis maximal 5,0 % des Gewässervolumens.
Dabei kann das Behandlungssystem aus einer oder mehreren gleichzeitig arbeitenden Behandlungszellen bzw. Behältern bestehen.

Die verwendete Trägermaterialschüttung im Wasserbehandlungssystem besteht aus locker liegendem Material mit einer großen Teilchenoberfläche. Das Schüttmaterial ist so beschaffen, dass es nicht vollständig mit Wasser gesättigt und nicht durch die auf ihm gebildeten Mikroorganismen sowie den Inhaltsstoffen des Wasserbehandlungssystems aufgequollen oder zersetzt wird Zwischen den einzelnen Trägermaterialteilchen ist genügend Zwischenraum zum Durchspülen des Wassers vorhanden, ohne dass sich Hohlräume zusetzen und so den Durchfluss des Wasser-Luftgemisches behindern könnten.

Der Ablauf des Behandlungssystem ist so bemessen und konstruiert, dass das dem Ablauf zugeführte zu behandelnde Wasser stets ohne Rückstau im Behandlungssystem wieder zum Gewässer abfließt und keine Trägermaterialteilchen mit ausgetragen werden können.

Zur Inbetriebnahme des Behandlungssystems wird nur Wasser aus dem zu behandelnden Gewässer, sowie nur konzentriertes organisches Material aus diesem zur Erzeugung des mikroorganischen Belages auf der locker liegenden Trägermaterialschüttung verwendet.

Das Behandlungssystem muß weitestgehend kontinuierlich mit zu behandelndem Wasser und Luft durchströmt werden. Es erlangt nach nur kurzen Betriebspausen und wiederholter Inbetriebnahme kurzfristig wieder seinen Wirkungsgrad durch erneutes Durchströmen mit zu behandelndem Wasser und Luft selbstständig zurück.

Das Behandlungssystem kann auch in mehreren aufeinander folgenden Stufen in Batteriebauweise aufgebaut sein.

Der Vorteil der Erfindung besteht insbesondere darin, dass das zu behandelnde Wasser während dem Durchfluss durch das locker liegende Trägermaterial mit einer sehr großen Oberfläche und genügend freien Zwischenräumen einen sehr langen Kontakt mit dem mitgerissenen Luftsauerstoff hat, so seine Sättigung mit diesem erhalten kann und die Mikroorganismen ebenfalls den für ihren Stoffwechsel benötigten Sauerstoff in genügendem Maß zugeführt bekommen. Damit verbunden ist ein hoher Wirkungsgrad des Behandlungssystems gegenüber herkömmlichen Behandlungsverfahren gegeben.

Aufgrund des sehr geringen Anlagenvolumens und der einfachen technische Gestaltung des Behandlungssystems sind die Anschaffungs- und Betriebskosten des beschriebenen Verfahrens sowie der Wartungsaufwand und die Störanfälligkeit im Vergleich zu anderen Verfahren sehr gering.

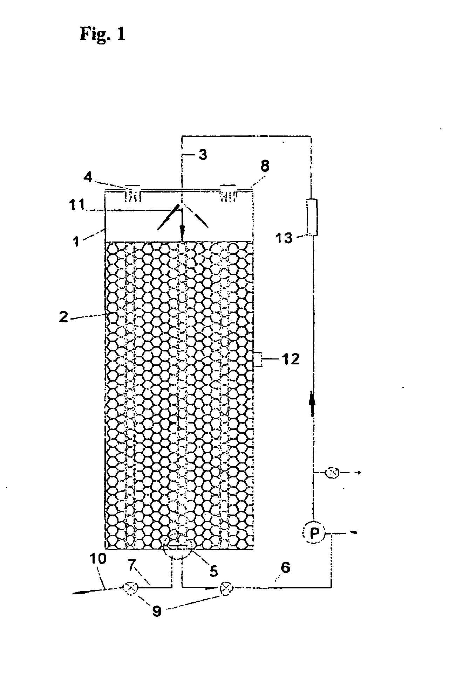

Nachfolgend soll die Erfindung an einem Ausführungsbeispiel näher erläutert werden.
In der beigefügte Zeichnung zeigt
- Fig. 1: einen schematischen Längsschnitt durch ein erfindungsgemäßes Behandlungssystem.

### Ausführungsbeispiel:

Im diesem Fall handelt es sich um einen neu angelegten Schwimmteich, dessen wasserhaltende, bauliche Abdichtung aus schwarzer Teichfolie besteht und der ein Gesamtwasservolumen von ca. 100 m3 Inhalt hat. Der Schwimmbereich ist ca. 1,5 m tief, 4 m breit und 12 m lang, die restlichen Flächen sind mit unterschiedlichen Höhen als Kies- und/oder Steinbereiche ausgestaltet und dienen nur der optischen Einfassung des Schwimmteiches. Im Randbereich der Flachwasserzone wurde in Windrichtung ein Rohrskimmer eingebaut, der das Oberflächenwasser des Teiches abzieht und in dem Feststoffe größer 2 mm Querschnitt gesammelt werden. Der Skimmer wird täglich oder nach Erfahrung auf gesammelte Feststoffe geprüft und entsprechend geleert.
Eine handelsübliche Schwimmbadpumpe zieht das durch den Skimmer abzuziehende Oberflächenwasser des zu behandelnden Gewässers ab und fördert es zum Zulauf 3 des in der Fig. 1 dargestellten Behandlungssystems, das mit einem Durchmesser von 800 mm und einer Gesamthöhe von 2000 mm, ein Gesamtvolumen von ca. 1000 Ltr. Inhalt hat und im Freien mit seiner Aufstandfläche über dem Wasserspiegel des zu behandelnden Gewässers stehend installiert ist.

Die äußere Hülle 1 des Behandlungssystems ist aus thermoplastischem UV-beständigem Kunststoff mit weitestgehend transparenten Bereichen hergestellt, wodurch die innere locker liegende Trägermaterialschüttung 2, welche aus 3 -6 mm großem Glasschaum-Kies besteht, zu sehen ist und genügend Lichteinfall an die Randzonen der Trägermaterialschüttung 2 am Bereich der äußeren Hülle 1 gewährleistet wird.

In der Druckleitung der Schwimmbadpumpe wurde zwischen deren Abgang und dem Zulauf 3 zum Behandlungssystem ein einstellbarer Abzweig zu einer, dem Skimmer gegenüberliegenden im Teichuferbereich platzierten künstlichen Wassereinlaufstelle installiert, über die die Aufgabemenge des zu behandelnden Wassers in das Behandlungssystem reguliert werden kann und eine künstliche Oberflächenwasserbewegung des Teichwassers in Richtung des Skimmers erzeugt wird. Zwischen dem vorgenannten Abzweig und dem Zulauf 3 ist zusätzlich ein Durchflussmengenmesser 13 installiert, welcher der Kontrolle und der Beurteilung der das Behandlungssystem durchfließenden zu behandelnden Wassermenge dient.

Das über den Zulauf 3 dem Behandlungssystem im oberen Teil zugeführte zu behandelnde Wasser wird über Einströmdüsen 11 so über der Trägermaterialschüttung gleichmäßig verteilt, dass ein optimales Einströmen in das Behandlungssystem gewährleistet wird und der dem Behandlungssystem zur Verfügung stehende Luftsauerstoff aus der Umgebung durch die Öffnungen 4 in der Abdeckung 8 des Behandlungssystems mitgerissen und so dem zu behandelnden Wasser und dem sich auf der Trägermaterialschüttung 2 bildenden mikrobiologischen Belag zur Verfügung gestellt wird.

Die Öffnungen 4 wurden so gestaltet, dass sie gleichmäßig um den Zulauf 3 herum angeordnet und mit Abdeckungen gegen Verschmutzungen von Außen sowie gegen den Zugang von Tieren geschützt sind, so dass immer eine ausreichende Luftsauerstoffzuführung möglich ist.

Die erste Teichfüllung erfolgte mit Leitungswasser aus einem Löschwasserhydranten. Da dieser lange Zeit nicht gespült wurde, war das in den Teich einströmende Wasser sehr braun und wurde dazu noch beim Überströmen der Kiesschüttung im Randbereich des Schwimmteiches durch Ausschwemmungen von mineralischen Schwebstoffen zusätzlich verunreinigt, so dass eine milchig, braune Trübe des Wassers die Folge war.

Die Aufgabe des Behandlungssystems war darin gestellt, das Wasser des Schwimmteiches so zu behandeln, dass es klar und sauber wird, sowie stabil so bleibt, sich keine Algen in ihm bilden können, sowie keine chemischen Mittel zum Einsatz kommen müssen. Dabei sind die wichtigsten Bewertuagskriterien wie folgt angelegt :
- Sichttiefe und Trübe
- geringe Phosphat- u. Stickstoffbelastung
- PH-Wert
- geringe Schadstoffbelastung

Nach erfolgter Inbetriebnahme des Behandlungssystems entsprechend der Figur 1 bildeten nun die organischen Inhaltsstoffe des zu behandelnden Wassers des Schwimmteiches beim Durchlaufen des Behandlungssystems innerhalb von 4 Tagen einen leichten bräunlichen Belag auf der Oberfläche der Trägermaterialschüttung 2. Am 4. Tag begann das im Schwimmteich vorhandene bräunlich trübe Wasser eine grünlich bräunliche Färbung anzunehmen, wodurch die Aktivierung der, der Schwimmteichgewässer eigenen Biologie gekennzeichnet wurde. Im vorliegenden Fall wurde wegen der ersten Befüllung des Gewässers auf eine Umlauf-Inbetriebnahme mit organischem Material des zu behandelnden Gewässers verzichtet. Es war noch kein organisches Material vorhanden. Die zu diesem Zweck vorgesehene Umlaufleitung 6 am Behandlungssystem blieb daher unbenutzt.

In den darauf folgenden Tagen konnte beobachtet werden, dass sich die Schwebstoffe des Gewässers immer mehr auf der Folienoberfläche des Schwimmteiches absetzten, einen leicht schleimigen Belag bildeten und sich der bräunliche mikrobiologische Belag im Behandlungssystem ebenfalls weiter entwickelte.

Weiter konnte beobachtet werden, dass das zu behandelnde Wasser seit der Inbetriebnahme des Behandlungssystems sehr gut und optimal über der Trägermateriaischüttung 2 beim Einströmen in das Behandlungssystem über die Einströmdüsen 11 verteilt wird, einen sehr kontinuierlichen Durchfluß durch die Trägermaterialschüttung 2 aufweist und ohne Rückstau im Behandlungssystem durch den Abscheider 5 im unteren Teil des Behandlungssystems über den Ablauf 7 sowie über die Gefälleleitung 10 kontinuierlich abfließt, ohne dass Bestandteile der Trägermaterialschüttung 2 ausgetragen werden.

Beim Durchlaufen des zu behandelnden Wassers durch das Behandlungssystem kann sehr deutlich durch die transparenten Bereiche der Hülle 1 beobachtet werden, dass Luftsauerstoff aus dem Umfeld des Behandlungssystems über die Öffnungen 4 eingesogen, mitgerissen und mit dem zu behandelnden Wasser vermischt wird. Dies zeigt sich sehr deutlich, in dem sich in den Hohlräumen der locker liegenden Trägermaterialschüttung 2 unzählige Lüftbläschen mit sehr hoher Turbolenz bewegen und so auf ihrem Weg durch die Trägermaterialschüttung 2 den mikrobiologischen Belag auf dieser mit ausreichend Sauerstoff versorgen.

Das aus dem Behandlungssystem abfließende durch die Mündung der Gefälleleitung 10, welche ebenfalls gegenüber dem Skimmer in der Uferzone des zu behandelnden Gewässers platziert ist, wieder im Schwimmteich eingetragene behandelte Wasser ist in seiner Farbe, Trübe und Klarheit bereits innerhalb der ersten zwei Betriebswochen des Behandlungssystems wesentlich besser als dass im Schwimmteich befindliche Wasser geworden.

Die Funktionstüchtigkeit des Behandlungssystems kann ohne großen Aufwand zu jeder Zeit kontrolliert werden, da der Zustand der Trägermaterialschüttung 2 durch die transparenten Bereiche der Hülle 1 beurteilt werden kann.

Zusätzlich besteht die Möglichkeit das Innere der Trägermaterialschüttung 2 zu beurteilen, indem über die, an der Hülle 1 in unterschiedlichen Höhen angeordneten Prüfstutzen 12 ein Prüfrohr eingebracht werden kann, mit dessen Hilfe eine Probe aus dem gesamten Querschnitt der Trägermaterialschüttung 2 entnommen werden kann.

Diese Proben wurden über den gesamten Zeitraum seit der Inbetriebnahme des Behandlungssystems in regelmäßigen Abständen entnommen, hierbei kann festgestellt werden, dass sich das Gefüge der locker liegenden Trägermaterialschüttung 2 nicht verändert hat, sich keine Hohlräume durch Absetzstoffe zugesetzt haben und überall ein gleichmäßiger ungestörter mikrobiologischer Belag gebildet hat. Sämtliches über das zu behandelnde Wasser in das Behandlungssystem eingetragenes organisches Material wurde durch den mikrobiologischen Belag der Trägermaterialschüttung 2 verarbeitet. Es werden sogar Insekten und andere organische Substanzen, die als Teile bis 2 mm Querschnitt eingetragen werden vollständig biologisch abgebaut.

Drei Wochen nach der Inbetriebnahme des Behandlungssystems war bereits der gesamte Wasserinhalt des Schwimmteiches so klar geworden, dass die anfängliche Sichttiefe von 10 cm auf ihr Maximum 150 cm gebracht war, sich nur noch sehr wenige kleinste Schwebstoffe im Wasser befanden, es fast absolut klar und optisch sauber geworden ist.

Im bisherigen Zeitraum des Betriebes der Behandlungsanlage haben sich im Schwimmteichbereich keine Algen irgendeiner Form gebildet. Dies ist darauf zurück zu führen, dass neben der sehr guten Wasserqualität, die fast reinem Trinkwasser entspricht, auch das Verhältnis der organischen Inhalts- sowie Nährstoffe ausgewogen ist, so dass trotz klarem Wasser und optimalem Lichteinfall im Gewässer die Voraussetzungen zur Algenbildung fehlen. Dies wird auch durch den Umstand belegt, dass sich an der Innenseite der transparenten Bereiche der Hülle 1 des Behandlungssystems Fadenalgen auf der Randzone der Trägermaterialschüttung 2 bilden, da sie im Behandlungssystem ein optimal vorhandenes Sauerstoff und Nährstoffangebot sowie das zu ihrer Bildung notwendige Licht zur Verfügung haben.

Durch die Anwendung der Erfindung kann ein kostengünstiges, sehr Platz sparendes einfaches Verfahren angeboten werden, mit dem es möglich ist, auf Dauer klares, sauberes Wasser zu erhalten, ohne dass sich in ihm störende Algen bilden können und zu dem keine chemischen Mittel verwendet werden müssen.
Mit der beschriebenen Behandlungsanlage konnten unter den oben genannten Bedingungen folgende Wasserwerte erreicht:
- klares, optisch sauberes Wasser mit maximaler Sichttiefe sowie Sichtweite,
   - Nitrat 21 mg/l
   - Phosphat 0,4 mg/l
   - Nitrit 0,1 mg/l
   - Härte 9,2 dH
   - ph-Wert 7,8
   - Ammonium-Stickstoff 7 µg/l.

### Bezugszeichenaufstellung

- 1: äußere Hülle
- 2: Trägermaterialschüttung
- 3: Zulauf
- 4: Öffnungen
- 5: Abscheider
- 6: Umlaufleitung
- 7: Ablauf
- 8: Abdeckung
- 9: Drosselventil
- 10: Gefälleleitung
- 11: Einströmdüsen
- 12: Probenahme
- 13: Durchflussmengenmesser

## Patentansprüche

1. Verfahren zur mikrobiologischen Behandlung von Wasser aus Landschafts- und Waldseen, Talsperren, Natur- und Freibädern, Schwimmbädern, Pools, Schwimm- und Badeteiche sowie Brauchwassersammelbecken unter konstanter Zuführung von Luftsauerstoff zur dauerhaften Erhaltung von sauberem und klarem Wasser ohne chemische Zusätze, wobei das zu reinigende Wasser von Oben nach Unten durch das Behandlungssystem fließt,
**dadurch gekennzeichnet, dass**
- dem Behandlungssystem, dessen Volumen maximal 5% des Gewässervolumens entspricht, aus einer oder mehreren gleichzeitig arbeitenden Behandlungszellen besteht,
- das zu behandelnde Wasser, welchem vor der Zuleitung zum Behandlungssystem grobe Feststoffe über 2 mm Querschnitt entzogen wurden von oben zugeführt und verteilt wird,
- das Wasser dabei dem Behandlungssystem durch entsprechende Öffnungen den aus der Umgebung zur Verfügung stehenden Luftsauerstoff ohne zusätzlichen Druck mit sich reißt und als Wasser-Luftgemisch die locker liegende Trägermaterialschüttung mit großer Teilchenoberfläche, auf der sich ein dem zu behandelnden Gewässer eigener mikrobiologischer Belag bildet in Fließrichtung von oben nach unten in freiem Durchlauf durchfließt, sowie
- über den Ablauf des Behandlungssystems, der so gestaltet ist, dass die Bestandteile der Trägermaterialschüttung nicht mit ausgetragen werden, wieder im Gewässer mündet oder diesem zugeleitet wird, wobei der Ablauf des Behandlungssystems durch eine Ablaufsicherung abgesichert ist, so dass das dem Behandlungssystem zugeführte zu behandelnde Wasser stets ohne Rückstau im Behandlungssystem wieder zum Gewässer abfließt und keine Trägermaterialbestandteile mit ausgetragen werden können.

2. Verfahren zur mikrobiologischen Behandlung von Wasser aus fließenden und/oder stehenden Gewässern nach dem Anspruch 1, **dadurch gekennzeichnet, dass** das Volumen des Behandlungssystems mindestens 0,3 bis maximal 5,0 % des Gewässervolumens beträgt.

3. Verfahren zur mikrobiologischen Behandlung von Wasser aus fließenden und/oder stehenden Gewässern einem der Ansprüche 1 und 2, **dadurch gekennzeichnet, dass** das dem zu behandelnde Wasser vor der Zuleitung zum Behandlungssystem grobe Feststoffe kleiner 2 mm Querschnitt entzogen werden.

4. Verfahren zur mikrobiologischen Behandlung von Wasser aus fließenden und/oder stehenden Gewässern nach einem der Ansprüche 1 bis 3, **dadurch gekennzeichnet, dass** dem Behandlungssystem über die aus thermoplastischem UV-beständigem Kunststoff mit weitestgehend transparenten Bereichen ausgebildete Behälterwandung des Behandlungssystems wenigstens an dessen Kontaktflächen zur Trägermaterialschüttung ein Lichteinfall zugeführt wird.

5. Verfahren zur mikrobiologischen Behandlung von Wasser aus fließenden und/oder stehenden Gewässern nach einem der Ansprüche 1 bis 4, **dadurch gekennzeichnet, dass** die Trägermaterialschüttung aus locker liegendem Material mit einer großen Teilchenoberfläche besteht, welches nicht durch die mit Wasser umspülten Mikroorganismen sowie Inhaltstoffe des Behandlungssystems aufgequollen oder zersetzt wird, sowie zwischen den einzelnen Trägermaterialteilchen genügend Zwischenraum zum Durchspülen des Wassers vorhanden ist, ohne dass sich Hohlräume zusetzen und so den Durchfluss des Wasser-Luftgemisches behindern könnten.

6. Verfahren zur mikrobiologischen Behandlung von Wasser aus fließenden und/oder stehenden Gewässern nach einem der Ansprüche 1 bis 5, dadurch gekennzeichet, dass zur Inbetriebnahme des Behandlungssystems nur Wasser aus dem zu behandelnden Gewässer und/oder nur konzentriertes organisches Material aus diesem zur Erzeugung des mikroorganischen Belages auf der locker liegenden Trägennaterialschüttung verwendet wird.

7. Verfahren zur mikrobiologischen Behandlung von Wasser aus fließenden und/oder stehenden Gewässern nach einem der Ansprüche 1 bis 6, **dadurch gekennzeichnet, dass** das Behandlungssystem ist weitestgehend kontinuierlich mit zu behandelndem Wasser und Luft zu durchströmen.

8. Verfahren zur mikrobiologischen Behandlung von Wasser aus fließenden und/oder stehenden Gewässern nach einem der Ansprüche 1 bis 7, **dadurch gekennzeichnet, dass** das Behandlungssystem in mehreren aufeinander folgenden Bearbeitungsstufen in Form von einer Batteriebauweise arbeitet.

## Claims

1. Method for microbiological treatment of water from *landscape and woodland lakes, dams, nature and open-air baths, swimming baths, pools, swimming and bathing ponds and also service water collecting tanks* with constant feed of atmospheric oxygen for permanent maintenance of clean and clear water without chemical additives, wherein the water that is to be purified flows in free flow from top to bottom through the treatment system, and the effluent of the treatment system, which treatment system is designed in such a manner that the components of the support material bed are not co-discharged, opens out back into the body of water or is passed thereto,
**characterized in that**
- the treatment system, the volume of which corresponds to a maximum of 5% of the volume of the body of water, consists of one or more treatment cells operating simultaneously,
- the water that is to be treated, from which coarse solids over 2 mm in cross section have been removed prior to passage to the treatment system, is fed from the top and distributed,
- the water in this case entrains into the treatment system the atmospheric oxygen available from the surroundings without additional pressure via corresponding openings and flows as a water-air mixture through the loosely-lying support material bed of large particle surface area on which a microbiological coating specific to the body of water that is to be treated forms, and
- via the effluent of the treatment system which is designed in such a manner that the components of the support material bed are not co-discharged, opens out again into the body of water or is passed thereto,
wherein
- *the effluent of the treatment system is safeguarded via an effluent safeguard in such a manner that the water that is to be treated that is fed to the treatment system always drains off back to the body of water without tailback in the treatment system and no support material components can be co-discharged.*

2. Method for microbiological treatment of water from flowing and/or static bodies of water according to Claim 1, **characterized in that** the volume of the treatment system is at least 0.3 to a maximum of 5.0% of the volume of the body of water.

3. Method for microbiological treatment of water from flowing and/or static bodies of water according to one of Claims 1 and 2, **characterized in that** coarse solids less than 2 mm in cross section are removed from the water that is to be treated before it is passed to the treatment system.

4. Method for microbiological treatment of water from flowing and/or static bodies of water according to any one of Claims 1 to 3, **characterized in that** a light incidence is passed to the treatment system via the treatment system container wall that is fabricated of UV-resistant thermoplastic having very substantially transparent regions, at least at the contact surfaces of the treatment system to the support material bed.

5. Method for microbiological treatment of water from flowing and/or static bodies of water according to any one of Claims 1 to 4, **characterized in that** the support material bed consists of loosely-lying material having a high particle surface area, which material is not swollen or decomposed by the water-flushed microorganisms and also components of the treatment system, and also, between the individual support material particles, sufficient interstitial space is present for flushing through the water, without cavities becoming blocked and thus being able to prevent the flow-through of the water-air mixture.

6. Method for microbiological treatment of water from flowing and/or static bodies of water according to any one of Claims 1 to 5, **characterized in that**, for starting up the treatment system, only water from the body of water that is to be treated and/or only concentrated organic material therefrom is used for generating the microbiological coating on the loosely-lying support material bed.

7. Method for microbiological treatment of water from flowing and/or static bodies of water according to any one of Claims 1 to 6, **characterized in that** water that is to be treated and air are to flow very substantially continuously through the treatment system.

8. Method for microbiological treatment of water from flowing and/or static bodies of water according to any one of Claims 1 to 7, **characterized in that** the treatment system operates in a plurality of successive processing steps in the form of a battery structure.

## Revendications

1. Procédé de traitement biologique de l'eau provenant de lacs paysagers et forestiers, de barrages, de bains naturels ou en plein air, de mares, d'étangs de natation ou de baignade, ainsi que de bassins de collecte d'eaux usées avec apport constant d'oxygène atmosphérique pour l'obtention durable d'eau propre et claire sans additifs chimiques, dans lequel l'eau à épurer circule en écoulement libre de haut en bas à travers le système de traitement et l'évacuation du système de traitement, qui est configurée de telle manière que les constituants de la charge de matières porteuses ne soient pas emportés, débouche de nouveau dans les eaux ou est renvoyée dans celles-ci, **caractérisé en ce que**
- dans le système de traitement, dont le volume correspond au maximum à 5 % du volume des eaux et qui se compose d'une ou de plusieurs cellules de traitement opérant simultanément,
- l'eau à traiter, dont les grosses matières solides de plus de 2 mm de section ont été retirées avant l'envoi au système de traitement, est introduite par le haut et répartie,
- l'eau entraîne en l'occurrence avec elle vers le système de traitement l'oxygène de l'air disponible dans l'atmosphère à travers des ouvertures correspondantes, sans pression supplémentaire, et s'écoule, sous forme de mélange eau-air, à travers la charge ameublie de matières porteuses avec une grande surface de particules, sur laquelle il se forme un dépôt biologique propre à l'eau à traiter, et
- par l'évacuation du système de traitement, qui est configuré de telle manière que les constituants de la charge de matières porteuses ne soient pas emportés, débouche de nouveau dans les eaux ou est renvoyée à celles-ci, dans lequel
- l'évacuation du système de traitement est sécurisée par une sécurité d'évacuation, de telle manière que l'eau à traiter envoyée au système de traitement s'écoule toujours de nouveau vers les eaux sans retenue dans le système de traitement et qu'aucun constituant de la charge de matières porteuses ne puisse être entraîné avec celle-ci.

2. Procédé de traitement biologique d'eau provenant de cours d'eau et/ou d'eaux stagnantes selon la revendication 1, **caractérisé en ce que** le volume du système de traitement vaut au moins 0,3 à 5 % au maximum du volume des eaux.

3. Procédé de traitement biologique d'eau provenant de cours d'eau et/ou d'eaux stagnantes selon l'une des revendications 1 et 2, **caractérisé en ce que** les grosses matières solides inférieures à 2 mm de section sont retirées de l'eau à traiter avant l'envoi au système de traitement.

4. Procédé de traitement biologique d'eau provenant de cours d'eau et/ou d'eaux stagnantes selon l'une des revendications 1 à 3, **caractérisé en ce qu'**une lumière incidente est envoyée au système de traitement via la paroi de réservoir du système de traitement réalisée en matière plastique thermoplastique résistant aux UV avec des zones largement transparentes, au moins dans les faces de contact de celle-ci avec la charge de matières porteuses.

5. Procédé de traitement biologique d'eau provenant de cours d'eau et/ou d'eaux stagnantes selon l'une des revendications 1 à 4, **caractérisé en ce que** la charge de matières porteuses se compose de matières ameublies avec une grande surface de particules, qui ne sont pas gonflées ou décomposées par les microorganismes ainsi que les ingrédients du système de traitement enrobés d'eau, et il existe entre les diverses particules de matières porteuses suffisamment d'espace intermédiaire pour le brassage de l'eau, sans que des cavités puissent s'obstruer et ainsi empêcher la circulation du mélange eau-air.

6. Procédé de traitement biologique d'eau provenant de cours d'eau et/ou d'eaux stagnantes selon l'une des revendications 1 à 5, **caractérisé en ce que**, pour la mise en service du système de traitement, on utilise uniquement de l'eau provenant des eaux à traiter et/ou uniquement une matière organique concentrée provenant de celles-ci pour la production du dépôt micro-organique sur la charge de matières porteuses ameublies.

7. Procédé de traitement biologique d'eau provenant de cours d'eau et/ou d'eaux stagnantes selon l'une des revendications 1 à 6, **caractérisé en ce que** le système de traitement doit être traversé largement en continu par l'eau à traiter et l'air.

8. Procédé de traitement biologique d'eau provenant de cours d'eau et/ou d'eaux stagnantes selon l'une des revendications 1 à 7, **caractérisé en ce que** le système de traitement opère en plusieurs étapes de traitement successives sous la forme d'une construction en batterie.
